# EUROPEAN PATENT SPECIFICATION

(11) **EP 2 184 697 B1**
(45) Date of publication and mention of the grant of the patent: **29.08.2012**
(21) Application number: 09172696.8
(22) Date of filing: 09.10.2009
(51) Int. Cl.: G06F 21/04

(54) **Real-time data protection method and data protection device for implementing the same**
Echtzeitdatenschutzverfahren und Datenschutzvorrichtung zur Implementierung desselben
Procédé de protection de données en temps réel et dispositif de protection de données pour l'implémenter

(30) Priority: 23.10.2008 TW 97140657
(43) Date of publication of application: 12.05.2010
(73) Proprietor: Chou, Hung-Chien, Taichung City, Nantun District (TW)
(72) Inventor: Chou, Hung-Chien, Taichung City, Nantun District (TW)
(74) Representative: Cordina, Kevin John

(56) References cited:
- EP-A- 0 461 792
- WO-A-97/16779
- WO-A-03/021466
- DE-A1- 3 742 117
- US-A1- 2002 016 934
- US-A1- 2005 066 186
- US-A1- 2007 143 593

## Description

This invention relates to a data protection method, particularly to a real-time data protection method.

As the information industry progresses, computers and the Internet, through which computer information are accessed, have become indispensable communication tools in our daily lives. This results in proliferation of hackers who intentionally and maliciously intrude into a computer system and alter or destroy data or programs in the computer system. This poses a maj or threat to the reliability of computer information. Various techniques have been proposed to counter that threat.

One conventional technique utilizes a computer firewall. Unfortunately, computer firewalls have security loopholes that may be exploited by a hacker to get through the computer firewall and gain access to information in a computer.

In another conventional technique, input data are manually inspected to determine whether the input data have been modified. This conventional technique, however, is time consuming.

In yet another conventional technique, a program calculates a hash value for each packet of input data using a hash function and stores the input data in a storage device. A different hash value calculated at a later time indicates whether or not the corresponding packet of the input data has been modified. The modified input data may be recovered using an original copy of the input data previously stored in the storage device. This conventional technique is disadvantageous in that a large capacity storage device is required. In addition, the program is vulnerable to viruses and hackers.

Therefore, an object of the present invention is to provide a real-time data protection method that can overcome the aforesaid drawbacks of the prior art.

Another object of the present invention is to provide a data protection device that implements the real-time data protection method.

According to an aspect of the present invention, a real-time data protection method is implemented by a data protection device, and comprises: A) configuring the data protection device to receive input data from an input device; B) configuring the data protection device to store the input data received in step A); C) configuring the data protection device to send the input data stored in step B) to a computing device, the computing device generating result data based on the input data sent thereto by the data protection device; D) configuring the data protection device to receive the result data from the computing device; E) configuring the data protection device to generate test data that correspond to the result data received in step D); F) configuring the data protection device to compare the test data generated in step E) to the input data stored in step B); and G) when it is determined in step F) that the test data are not identical to the input data, configuring the data protection device to indicate that the result data have been modified.

According to another aspect of the present invention, a data protection device comprises a comparing unit and a test data-generating unit. The comparing unit is adapted to be coupled to an input device and a computing device, and is configured to receive input data from the input device, to store the input data received thereby, and to send the input data to the computing device. The computing device generates result data based on the input data sent thereto by the comparing unit. The test data-generating unit is coupled to the comparing unit, is adapted to be coupled to the computing device, and is configured to receive the result data from the computing device, to generate test data that correspond to the result data received thereby, and to send the test data generated thereby to the comparing unit. The comparing unit is further configured to receive the test data sent thereto by the test data-generating unit, to compare the test data received thereby to the input data stored thereby, and to indicate that the result data have been modified when it is determined thereby that the test data are not identical to the input data.

Other features and advantages of the present invention will become apparent in the following detailed description of the preferred embodiment with reference to the accompanying drawings, of which:
Figure 1 is a circuit block diagram of the preferred embodiment of a data protection device according to the present invention; and
Figures 2 and 3 are flow charts of the preferred embodiment of a real-time data protection method according to the present invention to be implemented using the data protection device shown in Figure 1.

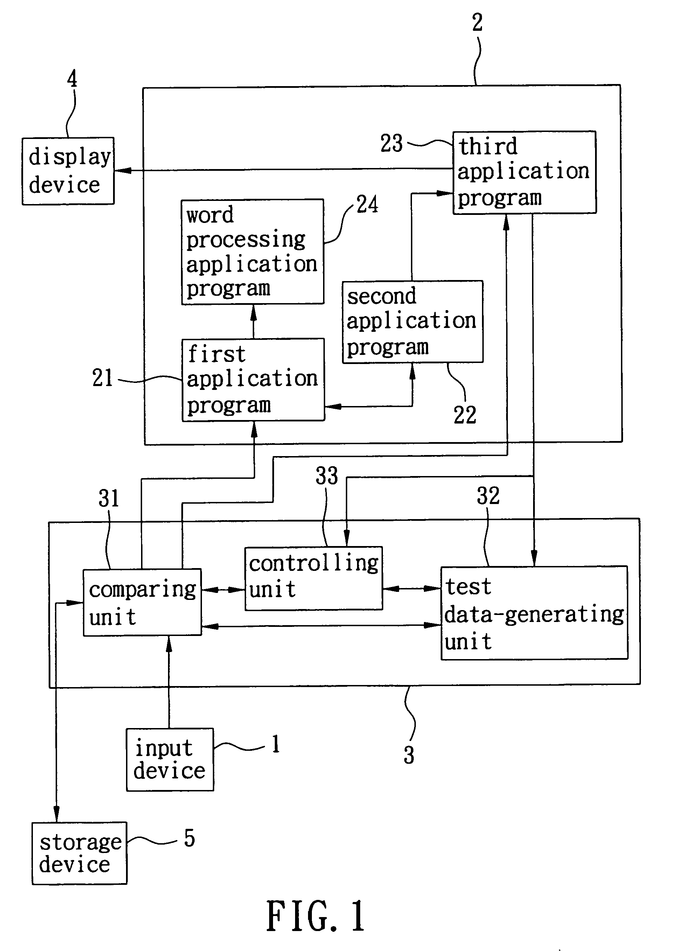

Referring to Figure 1, the preferred embodiment of a data protection device 3 according to this invention is shown to include a comparing unit 31 and a test data-generating unit 32.

The comparing unit 31 is connected to an input device 1, a computing device 2, and a storage device 5.

The input device 1 may be a computer keyboard, a computer mouse, or a touch panel.

The computing device 2 is installed with an operating system, and a word processing application program 24, e.g., Microsoft Word, which resides in the operating system, and is connected to a display device 4.

The storage device 5 stores therein first, second, and third executable files, each of which has an attribute that is set to hidden.

The test data-generating unit 32 is connected to the comparing unit 31 and the computing device 2.

The data protection device 3 further includes a controlling unit 33 connected to and controlling operations of the comparing unit 31 and the test data-generating unit 32.

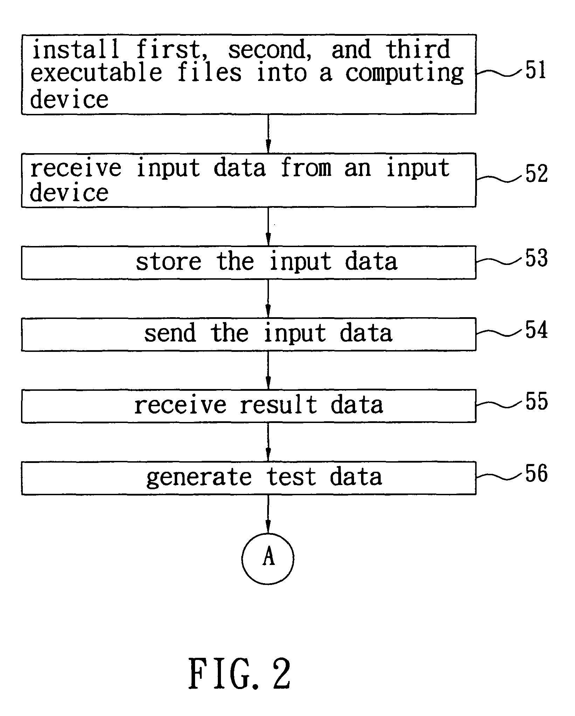

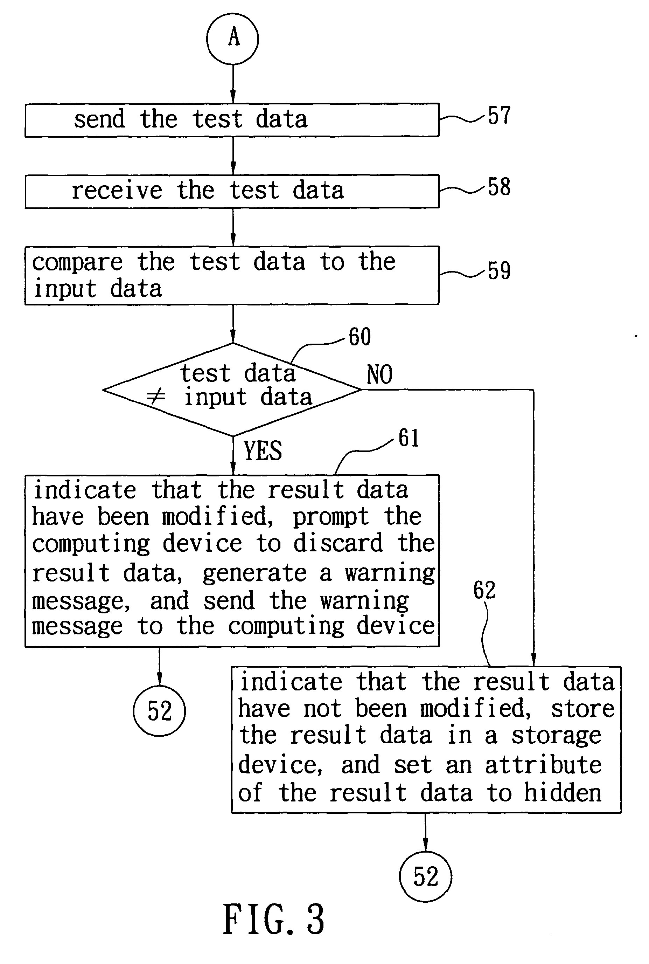

The preferred embodiment of a real-time data protection method to be implemented by the aforementioned data protection device 3 according to this invention will now be described with further reference to Figures 2 and 3.

In step 51, the comparing unit 31 sets the attributes of the first, second, and third executable files stored in the storage device 5 to read-only, and subsequently installs the first, second, and third executable files into the computing device 2, whereby the first, second, and third executable files serve as first, second, and third application programs 21, 22, 23 that reside in the operating system, respectively.

In step 52, the comparing unit 31 receives input data from the input device 1.

In step 53, the comparing unit 31 stores therein the input data received in step 52.

Alternatively, in this step, the input data may be stored in the storage device 5.

In step 54, the comparing unit 31 sends the input data stored in step 53 to the first application program 21.

The first application program 21 receives the input data sent thereto by the comparing unit 31, generates result data based on the input data received thereby, and sends the result data to the word processing application program 24.

The second application program 22 detects the result data generated by the first application program 21, and sends the result data detected thereby to the third application program 23.

The third application program 23 receives the result data sent thereto by the second application program 22, and sends the result data received thereby to the test data-generating unit 32.

In step 55, the test data-generating unit 32 receives the result data sent thereto by the third application program 23.

In step 56, the test data-generating unit 32 generates test data that correspond to the result data received in step 55.

For example, suppose that the first application program 21 is a Chinese input method editor (IME). Suppose further that the input data received in step 52 are in the form of pinyin. The result data generated by the first application program 21 are thus associated with Chinese characters and the test data generated in this step are thus in the form of pinyin.

In step 57, the test data-generating unit 32 sends the test data generated in step 56 to the comparing unit 31.

In step 58, the comparing unit 31 receives the test data sent thereto in step 57.

In step 59, the comparing unit 31 compares the test data received in step 58 to the input data stored in step 53.

In step 60, when it is determined in step 59 that the test data are not identical to the input data, the flow proceeds to step 61. Otherwise, i.e., it is determined in step 59 that the test data are identical to the input data, the flow proceeds to step 62.

In step 61, the comparing unit 31 indicates that the result data have been modified, prompts the third application program 23 to discard the result data, generates a warning message, and sends the warning message to the third application program 23. Thereafter, the flow goes back to step 52.

The third application program 23 controls the display device 4 to show the warning message sent to the third application program 23 by the comparing unit 31.

In step 62, the comparing unit 31 indicates that the result data have not been modified, stores the result data received in step 55 in the storage device 5, and sets an attribute of the result data stored thereby to hidden. Thereafter, the flow goes back to step 52.

The result data stored in this step can be used for data recovery when required in the future.

From the above description, since the comparing unit 31 stores an original copy of the input data, based on which the computing device 2 generates the result data, since the test data-generating unit 32 generates the test data that correspond to the result data, and since the comparing unit 31 compares the test data to the original copy of the input data stored thereby, the data protection device 3 of this invention determines in real-time whether the result data have been modified.

Furthermore, since the attributes of the first, second, and third executable files are set to read-only prior to installation thereof in the computing device 2 by the comparing unit 31, the first, second, and third executable files are prevented from being modified.

## Claims

1. A real-time data protection method to be implemented by a data protection device (3) coupled to an input device (1) wherein the input device may be a computer keyboard, a computer mouse, or a touch panel. and a computing device (2), said real-time data protection method comprising:
A) configuring the data protection device (3) to receive input data from the input device (1);
B) configuring the data protection device (3) to store the input data received in step A);
C) configuring the data protection device (3) to send the input data stored in step B) to the computing device (2), the computing device (2) generating result data based on the input data sent thereto by the data protection device (3);
D) configuring the data protection device (3) to receive the result data from the computing device (2) ;
E) configuring the data protection device (3) to generate test data that correspond to the result data received in step D);
F) configuring the data protection device (3) to compare the test data generated in step E) to the input data stored in step B); and
G) when it is determined in step F) that the test data are not identical to the input data, configuring the data protection device (3) to indicate that the result data have been modified.

2. The real-time data protection method as claimed in Claim 1, further comprising:
H) when it is determined in step F) that the test data are identical to the input data, configuring the data protection device (3) to indicate that the result data have not been modified.

3. The real-time data protection method as claimed in Claim 2, the data protection device (3) being further coupled to a storage device (5), wherein step H) includes the sub-steps of:
h1) configuring the data protection device (3) to store the result data received in step D) in the storage device (5); and
h2) configuring the data protection device (3) to set an attribute of the result data stored in sub-step h1) to hidden.

4. The real-time data protection method as claimed in Claim 1, the data protection device (3) being further coupled to a storage device (5), wherein, in step B), the input data is stored in one of the data protection device (3) and the storage device (5).

5. The real-time data protection method as claimed in Claim 1, the computing device (2) being coupled to a display device (4), wherein step G) includes the sub-steps of:
g1) configuring the data protection device (3) to prompt the computing device (2) to discard the result data;
g2) configuring the data protection device (3) to generate a warning message; and
g3) configuring the data protection device (3) to send the warning message generated in sub-step g2) to the computing device (2), the computing device (2) controlling the display device (4) to show the warning message sent thereto by the data protection device (3).

6. The real-time data protection method as claimed in Claim 1, the data protection device (3) being further coupled to a storage device (5), said real-time data protection method further comprising:
I) configuring the data protection device (3) to set an attribute of an executable file stored in the storage device (5) to read-only; and
J) configuring the data protection device (3) to install the executable file into the computing device (2), thereby permitting the computing device (2) to generate the result data.

7. The real-time data protection method as claimed in Claim 1, the data protection device (3) being further coupled to a storage device (5), said real-time data protection method further comprising:
I) configuring the data protection device (3) to set an attribute of an executable file stored in the storage device (5) to read-only; and
J) configuring the data protection device (3) to install the executable file into the computing device (2), thereby permitting the computing device (2) to send the result data generated thereby to the data protection device (3).

8. The real-time data protection method as claimed in Claim 1, the result data generated by the computing device (2) being associated with Chinese characters, wherein the test data generated in step E) are in the form of pinyin.

9. A data protection device (3), comprising:
a comparing unit (31) adapted to be coupled to an input device (1) wherein the input device may be a computer kenboard, a computer mouse, or a touch panel. and a computing device (2), and configured to receive input data from the input device (1), to store the input data received thereby, and to send the input data to the computing device (2), the computing device (2) generating result data based on the input data sent thereto by said comparing unit (31) ; and
a test data-generating unit (32) coupled to said comparing unit (31), adapted to be coupled to the computing device (2), and configured to receive the result data from the computing device (2), to generate test data that correspond to the result data received thereby, and to send the test data generated thereby to said comparing unit (31);
wherein said comparing unit (31) is further configured to receive the test data sent thereto by said test data-generating unit (32), to compare the test data received thereby to the input data stored thereby, and to indicate that the result data have been modified when it is determined thereby that the test data are not identical to the input data.

10. The data protection device (3) as claimed in Claim 9, wherein said comparing unit (31) isfurtherconfigured to store the result data received by said test data-generating unit (32) from the computing device (2) when it is determined thereby that the test data are identical to the input data.

11. The data protection device (3) as claimed in Claim 9, wherein said comparing unit (31) isfurtherconfigured to generate a warning message, and to send the warning message generated thereby to the computing device (2) when it is determined thereby that the test data are not identical to the input data, the computing device (2) controlling a display device (4) to show the warning message sent to the computing device (2) by said comparing unit (31).

12. The data protection device (3) as claimed in Claim 9, wherein said comparing unit (31) is further configured to prompt the computing device (2) to discard the result data when it is determined thereby that the test data are not identical to the input data.

13. The data protection device (3) as claimed in Claim 9, the result data generated by the computing device (2) being associated with Chinese characters, wherein the test data generated by said test data-generating unit (32) are in the form of pinyin.

## Patentansprüche

1. Echtzeit-Datenschutzverfahren, das von einer Datenschutzvorrichtung (3) angewendet werden soll, die mit einer Eingabevorrichtung (1), wobei die Eingabevorrichtung eine Computertastatur, eine Computermaus oder ein Bedienfeld sein kann, und mit einer Rechenvorrichtung (2) verbunden ist, wobei das Echtzeit-Datenschutzverfahren Folgendes umfasst:
A) Konfigurieren der Datenschutzvorrichtung (3) zum Empfangen von Eingabedaten von der Eingabevorrichtung (1);
B) Konfigurieren der Datenschutzvorrichtung (3) zum Speichern der in Schritt A) empfangenen Eingabedaten;
C) Konfigurieren der Datenschutzvorrichtung (3) zum Senden der in Schritt B) gespeicherten Eingabedaten an die Rechenvorrichtung (2), wobei die Rechenvorrichtung (2) Ergebnisdaten auf Basis der daran von der Datenschutzvorrichtung (3) gesendeten Eingabedaten erzeugt;
D) Konfigurieren der Datenschutzvorrichtung (3) zum Empfangen der Ergebnisdaten von der Rechenvorrichtung (2);
E) Konfigurieren der Datenschutzvorrichtung (3) zum Erzeugen von Testdaten, die den in Schritt D) empfangenen Ergebnisdaten entsprechen;
F) Konfigurieren der Datenschutzvorrichtung (3) zum Vergleichen der in Schritt E) erzeugten Testdaten mit den in Schritt B) gespeicherten Eingabedaten; und
G) wenn in Schritt F) bestimmt wird, dass die Testdaten nicht mit den Eingabedaten identisch sind, Konfigurieren der Datenschutzvorrichtung (3) zum Anzeigen, dass die Ergebnisdaten modifiziert wurden.

2. Echtzeit-Datenschutzverfahren nach Anspruch 1, das weiterhin Folgendes umfasst:
H) wenn in Schritt F) bestimmt wird, dass die Testdaten mit den Eingabedaten identisch sind, Konfigurieren der Datenschutzvorrichtung (3) zum Anzeigen, dass die Ergebnisdaten nicht modifiziert wurden.

3. Echtzeit-Datenschutzverfahren nach Anspruch 2, wobei die Datenschutzvorrichtung (3) weiterhin mit einer Speichervorrichtung (5) verbunden ist, wobei Schritt H) die folgenden Unterschritte beinhaltet:
h1) Konfigurieren der Datenschutzvorrichtung (3) zum Speichern der in Schritt D) empfangenen Ergebnisdaten in der Speichervorrichtung (5); und
h2) Konfigurieren der Datenschutzvorrichtung (3) zum Setzen eines Attributs der in Unterschritt h1) gespeicherten Ergebnisdaten auf "Versteckt".

4. Echtzeit-Datenschutzverfahren nach Anspruch 1, wobei die Datenschutzvorrichtung (3) weiterhin mit einer Speichervorrichtung (5) verbunden ist, wobei die Eingabedaten in Schritt B) in der Datenschutzvorrichtung (3) oder der Speichervorrichtung (5) gespeichert werden.

5. Echtzeit-Datenschutzverfahren nach Anspruch 1, wobei die Rechenvorrichtung (2) mit einer Anzeigevorrichtung (4) verbunden ist, wobei Schritt G) die folgenden Unterschritte beinhaltet:
g1) Konfigurieren der Datenschutzvorrichtung (3) zum Auffordern der Rechenvorrichtung (2), die Ergebnisdaten zu verwerfen;
g2) Konfigurieren der Datenschutzvorrichtung (3) zum Erzeugen einer Warnmeldung; und
g3) Konfigurieren der Datenschutzvorrichtung (3) zum Senden der in Unterschritt g2) erzeugten Warnmeldung an die Rechenvorrichtung (2), wobei die Rechenvorrichtung (2) die Anzeigevorrichtung (4) dahingehend steuert, die daran von der Datenschutzvorrichtung (3) gesendete Warnmeldung zu zeigen.

6. Echtzeit-Datenschutzverfahren nach Anspruch 1, wobei die Datenschutzvorrichtung (3) weiterhin mit einer Speichervorrichtung (5) verbunden ist, wobei das Echtzeit-Datenschutzverfahren weiterhin Folgendes umfasst:
I) Konfigurieren der Datenschutzvorrichtung (3) zum Setzen eines Attributs einer ausführbaren Datei, die in der Speichervorrichtung (5) gespeichert ist, auf "Schreibgeschützt"; und
J) Konfigurieren der Datenschutzvorrichtung (3) zum Installieren der ausführbaren Datei in der Rechenvorrichtung (2), wodurch der Rechenvorrichtung (2) ermöglicht wird, die Ergebnisdaten zu erzeugen.

7. Echtzeit-Datenschutzverfahren nach Anspruch 1, wobei die Datenschutzvorrichtung (3) weiterhin mit einer Speichervorrichtung (5) verbunden ist, wobei das Echtzeit-Datenschutzverfahren weiterhin Folgendes umfasst:
I) Konfigurieren der Datenschutzvorrichtung (3) zum Setzen eines Attributs einer ausführbaren Datei, die in der Speichervorrichtung (5) gespeichert ist, auf "Schreibgeschützt", und
J) Konfigurieren der Datenschutzvorrichtung (3) zum Installieren der ausführbaren Datei in der Rechenvorrichtung (2), wodurch der Rechenvorrichtung (2) ermöglicht wird, die dadurch erzeugten Ergebnisdaten an die Datenschutzvorrichtung (3) zu senden.

8. Echtzeit-Datenschutzverfahren nach Anspruch 1, wobei die von der Rechenvorrichtung (2) erzeugten Ergebnisdaten mit chinesischen Schriftzeichen in Zusammenhang stehen, wobei die in Schritt E) erzeugten Testdaten in der Form von Pinyin sind.

9. Datenschutzvorrichtung (3), die Folgendes umfasst:
eine Vergleichseinheit (31), die dazu angepasst ist, mit einer Eingabevorrichtung (1), wobei die Eingabevorrichtung eine Computertastatur, eine Computermaus oder ein Bedienfeld sein kann, und mit einer Rechenvorrichtung (2) verbunden zu werden, und dazu konfiguriert ist, Eingabedaten von der Eingabevorrichtung (1) zu empfangen, die dadurch empfangenen Eingabedaten zu speichern und die Eingabedaten an die Rechenvorrichtung (2) zu senden, wobei die Rechenvorrichtung (2) Ergebnisdaten auf Basis der daran von der Vergleichseinheit (31) gesendeten Eingabedaten erzeugt; und
eine Testdatenerzeugungseinheit (32), die mit der Vergleichseinheit (31) verbunden ist, dazu angepasst ist, mit der Rechenvorrichtung (2) verbunden zu werden, und dazu konfiguriert ist, die Ergebnisdaten von der Rechenvorrichtung (2) zu empfangen, Testdaten zu erzeugen, die den dadurch empfangenen Ergebnisdaten entsprechen, und die dadurch erzeugten Testdaten an die Vergleichseinheit (31) zu senden;
wobei die Vergleichseinheit (31) weiterhin dazu konfiguriert ist, die daran von der Testdatenerzeugungseinheit (32) gesendeten Testdaten zu empfangen, die dadurch empfangenen Testdaten mit den dadurch gespeicherten Eingabedaten zu vergleichen und anzuzeigen, dass die Ergebnisdaten modifiziert wurden, wenn dadurch bestimmt wird, dass die Testdaten nicht mit den Eingabedaten identisch sind.

10. Datenschutzvorrichtung (3) nach Anspruch 9, wobei die Vergleichseinheit (31) weiterhin dazu konfiguriert ist, die von der Testdatenerzeugungseinheit (32) gesendeten Ergebnisdaten von der Recheneinheit (2) zu speichern, wenn dadurch bestimmt wird, dass die Testdaten mit den Eingabedaten identisch sind.

11. Datenschutzvorrichtung (3) nach Anspruch 9, wobei die Vergleichseinheit (31) weiterhin dazu konfiguriert ist, eine Warnmeldung zu erzeugen und die dadurch erzeugte Warnmeldung an die Rechenvorrichtung (2) zu senden, wenn dadurch bestimmt wird, dass die Testdaten nicht mit den Eingabedaten identisch sind, wobei die Rechenvorrichtung (2) eine Anzeigevorrichtung (4) dahingehend steuert, die an die Rechenvorrichtung (2) von der Vergleichseinheit (31) gesendete Warnmeldung zu zeigen.

12. Datenschutzvorrichtung (3) nach Anspruch 9, wobei die Vergleichseinheit (31) weiterhin dazu konfiguriert ist, die Rechenvorrichtung (2) aufzufordern, die Ergebnisdaten zu verwerfen, wenn dadurch bestimmt wird, dass die Testdaten nicht mit den Eingabedaten identisch sind.

13. Datenschutzvorrichtung (3) nach Anspruch 9, wobei die von der Rechenvorrichtung (2) erzeugten Ergebnisdaten mit chinesischen Schriftzeichen in Zusammenhang stehen, wobei die von der Testdatenerzeugungseinheit (32) erzeugten Testdaten in der Form von Pinyin sind.

## Revendications

1. Procédé de protection de données en temps réel susceptible d'être mis en oeuvre par un dispositif de protection de données (3) couplé à un dispositif d'entrée (1), dans lequel le dispositif d'entrée peut être un clavier d'ordinateur, une souris d'ordinateur ou un écran tactile, et un dispositif informatique (2), ledit procédé de détection de données en temps réel comprenant les étapes consistant à :
A) configurer le dispositif de protection de données (3) pour recevoir des données d'entrée du dispositif d'entrée (1) ;
B) configurer le dispositif de protection de données (3) pour stocker les données d'entrée reçues à l'étape A) ;
C) configurer le dispositif de protection de données (3) pour envoyer les données d'entrée stockées à l'étape B) au dispositif informatique (2), le dispositif informatique (2) générant des données de résultats basées sur les données d'entrée qui lui sont envoyées par le dispositif de protection de données (3) ;
D) configurer le dispositif de protection de données (3) pour recevoir les données de résultats du dispositif informatique (2) ;
E) configurer le dispositif de protection de données (3) pour générer des données d'essai qui correspondent aux données de résultats reçues à l'étape D) ;
F) configurer le dispositif de protection de données (3) pour comparer les données d'essai générées à l'étape E) aux données d'entrée stockées à l'étape B) ; et,
G) lorsque l'on détermine à l'étape F) que les données d'essai ne sont pas identiques aux données d'entrée, configurer le dispositif de protection de données (3) pour indiquer que les données de résultats ont été modifiées.

2. Procédé de protection de données en temps réel selon la revendication 1, comprenant en outre l'étape consistant à :
H) lorsque l'on détermine à l'étape F) que les données d'essai sont identiques aux données d'entrée, configurer le dispositif de protection de données (3) pour indiquer que les données de résultats n'ont pas été modifiées.

3. Procédé de protection de données en temps réel selon la revendication 2, le dispositif de protection de données (3) étant par ailleurs couplé à un dispositif de stockage (5), dans lequel l'étape H) comprend les sous-étapes consistant à :
h1) configurer le dispositif de protection de données (3) pour stocker les données de résultats reçues à l'étape D) dans le dispositif de stockage (5) ; et
h2) configurer le dispositif de protection de données (3) pour régler un attribut des données de résultats stockées à la sous-étape h1) sur masquer.

4. Procédé de protection de données en temps réel selon la revendication 1, le dispositif de protection de données (3) étant en outre couplé à un dispositif de stockage (5), dans lequel, à l'étape B), les données d'entrée sont stockées dans un dispositif choisi parmi le dispositif de protection de données (3) et le dispositif de stockage (5).

5. Procédé de protection de données en temps réel selon la revendication 1, le dispositif informatique (2) étant couplé à un dispositif d'affichage (4), dans lequel l'étape G) comprend les sous-étapes consistant à :
g1) configurer le dispositif de protection de données (3) pour inviter le dispositif informatique (2) à mettre en rebut les données de résultats ;
g2) configurer le dispositif de protection de données (3) pour générer un message d'avertissement ; et
g3) configurer le dispositif de protection de données (3) pour envoyer le message d'avertissement généré à la sous-étape g2) au dispositif informatique (2), le dispositif informatique (2) commandant le dispositif d'affichage (4) pour montrer le message d'avertissement qui lui a été envoyé par le dispositif de protection de données (3).

6. Procédé de protection de données en temps réel selon la revendication 1, le dispositif de protection de données (3) étant par ailleurs couplé à un dispositif de stockage (5), le procédé de protection de données en temps réel comprenant par ailleurs les étapes consistant à :
I) configurer le dispositif de protection de données (3) pour régler un attribut d'un fichier exécutable stocké dans le dispositif de stockage (5) sur lecture seulement ; et
J) configurer le dispositif de protection de données (3) pour installer le fichier exécutable dans le dispositif informatique (2), permettant de la sorte au dispositif informatique (2) de générer les données de résultats.

7. Procédé de protection de données en temps réel selon la revendication 1, le dispositif de protection de données (3) étant en outre couplé à un dispositif de stockage (5), ledit procédé de protection de données en temps réel comprenant en outre les étapes consistant à :
I) configurer le dispositif de protection de données (3) pour régler un attribut d'un fichier exécutable stocké dans le dispositif de stockage (5) sur lecture seulement ; et
J) configurer le dispositif de protection de données (3) pour installer le fichier exécutable dans le dispositif informatique (2) permettant de la sorte au dispositif informatique (2) d'envoyer les données de résultats générées par celui-ci au dispositif de protection de données (3).

8. Procédé de protection de données en temps réel selon la revendication 1, les données de résultats générées par le dispositif informatique (2) étant associées à des caractères chinois, où les données d'essai générées à l'étape E) se présentent sous la forme de pinyin.

9. Dispositif de protection de données (3), comprenant :
une unité de comparaison (31) qui est à même d'être couplée à un dispositif d'entrée (1) et dans lequel le dispositif d'entrée peut être un clavier d'ordinateur, une souris d'ordinateur ou un panneau tactile, et un dispositif informatique (2) et configuré pour recevoir des données d'entrée du dispositif d'entrée (1), de stocker les données d'entrée reçues par celui-ci et d'envoyer les données d'entrée au dispositif informatique (2), le dispositif informatique (2) générant des données de résultats sur la base des données d'entrée qui lui ont été envoyées par ladite unité de comparaison (31) ; et
une unité génératrice de données d'essai (32) couplée à ladite unité de comparaison (31), qui est à même d'être couplée à l'unité informatique (2) et qui est configurée pour recevoir les données de résultats du dispositif informatique (2), de générer des données d'essai qui correspondent aux données de résultats reçues par celui-ci et d'envoyer les données d'essai générées de la sorte à ladite unité de comparaison (31) ;
dans lequel ladite unité de comparaison (31) est encore configurée pour recevoir les données d'essai qui lui sont envoyées par ladite unité génératrice de données d'essai (32) pour comparer les données d'essai reçues par celle-ci aux données d'entrée qui y sont stockées et pour indiquer que les données de résultats ont été modifiées lorsqu'il est déterminé par celle-ci que les données d'essai ne sont pas identiques aux données d'entrée.

10. Dispositif de protection de données (3), selon la revendication 9, dans lequel ladite unité de comparaison (31) est encore configurée pour stocker les données de résultats reçues par ladite unité génératrice de données d'essai (32) du dispositif informatique (2) lorsqu'il est déterminé par celui-ci que les données d'essai sont identiques aux données d'entrée.

11. Dispositif de protection de données (3), selon la revendication 9, dans lequel ladite unité de comparaison (31) est encore configurée pour générer un message d'avertissement et pour envoyer le message d'avertissement qui y est généré au dispositif informatique (2) lorsqu'il est déterminé par celui-ci que les données d'essai ne sont pas identiques aux données d'entrée, le dispositif informatique (2) commandant un dispositif d'affichage (4) pour montrer le message d'avertissement envoyé au dispositif informatique (2) par ladite unité de comparaison (31).

12. Dispositif de protection de données (3), selon la revendication 9, dans lequel ladite unité de comparaison (31) est encore configurée pour inviter le dispositif informatique (2) à mettre au rebut les données de résultats lorsqu'il est déterminé par celui-ci que les données d'essai ne sont pas identiques aux données d'entrée.

13. Dispositif de protection de données (3), selon la revendication 9, les données de résultats générées par le dispositif informatique (2) étant associées à des caractères chinois, dans lequel les données d'essai générées par ladite unité génératrice de données d'essai (32) se présentent sous la forme de pinyin.
